# EUROPEAN PATENT SPECIFICATION

(11) **EP 2 677 712 B1**
(45) Date of publication and mention of the grant of the patent: **04.03.2015**
(21) Application number: 11719292.2
(22) Date of filing: 14.02.2011
(51) Int. Cl.: H04L 29/06

(54) **Method, system and computer program for obtaining the level of user recognition of statements**
Verfahren, System und Computerprogramm für den Erhalt der Benutzererkennungsebene von Aussagen
Procédé, système et programme d'ordinateur pour l'obtention du degré de reconnaissance de déclarations par un utilisateur

(43) Date of publication of application: 25.12.2013
(73) Proprietor: Universidad Politécnica de Madrid, 28040 Madrid (ES)
(72) Inventor: MARTIN GARCIA, Yod, Samuel, E-28040 Madrid (ES); DEL ALAMO RAMIRO, José, María, E-28040 Madrid (ES); YELMO GARCIA, Juan, Carlos, E-28040 Madrid (ES)
(74) Representative: Carpintero Lopez, Francisco
(86) International application number: PCT/ES2011/070098
(87) International publication number: WO 2012/110669

(56) References cited:
- US-B1- 7 748 030
- JEAN-HENRY MORIN ED - JOHN G BRESLIN ET AL: "Towards Socially-Responsible Management of Personal Information in Social Networks", 3 March 2008 (2008-03-03), RECENT TRENDS AND DEVELOPMENTS IN SOCIAL SOFTWARE, SPRINGER BERLIN HEIDELBERG, BERLIN, HEIDELBERG, PAGE(S) 108 - 115, XP019154777, ISBN: 978-3-642-16580-1 page 108 - page 114
- NADIM SARROUH, FLORIAN EILERS, UWE NESTMANN, INA SCHIEFERDECKER: "Defamation-Free Networks through User-Centered Data Control", 6TH INTERNATIONAL WORKSHOP, STM 2010, 24 September 2010 (2010-09-24), XP002662487,
- CASTELLUCCIA C ET AL: "Owner-Centric Networking (OCN): Toward a Data Pollution-Free Internet", APPLICATIONS AND THE INTERNET, 2009. SAINT '09. NINTH ANNUAL INTERNATIONAL SYMPOSIUM ON, IEEE, PISCATAWAY, NJ, USA, 20 July 2009 (2009-07-20), pages 169-172, XP031524653, ISBN: 978-1-4244-4776-3

## Description

### TECHNICAL FIELD

The present invention is implemented in the field of information and communications technologies. In particular, the invention allows the user of a communications network to manage statements concerning him or her both dynamically and in a trustworthy manner. It discloses a method for querying, determining and obtaining the level of user recognition of a statement.

### BACKGROUND

There is currently a huge amount of work related to the management of trust in information and services in the field of information and communications technologies. For instance, digital signature schemes ("A Method For Obtaining Digital Signatures and Public-Key Cryptosystems," Communications of the ACM, 21(2): 120-126, Feb. 1978) have long allowed a first user who owns a public/private key pair to sign their own statements digitally, thus acknowledging his or her approval to said statements. Then, a second user or software entity is able to confirm faithfully that the first user actually signed that statement digitally, and that the statement integrity has been preserved since the moment that the first user signed it, thus demonstrating that the first user recognizes the validity of the statement. For instance, a Spanish national who has an eDNI (electronic identity card, which contains a public/private key pair) is able to sign an Income Tax Statement digitally, so that another user is able to confirm faithfully that the first user actually signed the statement and that this statement has not been modified since. Yet, digital-signature-based solutions, trusted though they are, do not support the dynamic management of statements, since the signatory cannot repudiate this statement. This is a drawback as once a first user has digitally signed a statement, it cannot be modified - otherwise, the signature would no longer be valid - and thus, a second user who receives the statement and the corresponding signature could not confirm faithfully whether and up to what level the first user still acknowledges the approval of this statement. Therefore, a first user is not able to manage his or her recognition of a statement dynamically while maintaining the degree of trust of the statement for those third parties requiring it.

Recently, new service providers on the Web have been delivering services to manage statements both dynamically and in a trustworthy manner. For instance, a centralized online social networking provider such as Facebook (http://www.facebook.com) allows a first user to 1) upload photographs to the provider site and, 2) generate statements related to these photographs -e.g. "This photograph displays this second user" where 'this second user' identifies a second user registered in Facebook. The dynamic management of statements is supported by allowing the user referred to in the statement (the second user) to delete this statement if he or she does not recognize it. The trustworthiness of the statements comes only from the social network provider which implements all the guarantee mechanisms that may be necessary. Consequently, this solution demands just one single administrative domain, i.e. Facebook, to store and supervise all the statement and its related terms (the photograph and the second user online identity) in order to be able to guarantee its authenticity. This is not always possible or desirable.

There are also decentralized online social networking models such as that proposed by OneSocialWeb (http://onesocialweb.org). These models allow different providers managing different nodes to cooperate and interoperate with one another while managing their own users and services. An implementation of a decentralized online social network might support a statement and the elements therein related be stored by either the same or several different providers in different domains, as long as these providers have set up underlying trust relationships between one another. Yet, like Facebook, these decentralized models infer that statements are trustworthy from the mere fact that they are stored by any provider, thus assuming that all of them are trusted parties -they do not consider the case of a malicious provider. Furthermore, these and other online social networking models do not support users in explicitly carrying out a dynamic yet trustworthy management of their recognition of statements.

In Towards Socially-Responsible Management of Personal Information In Social Networks, J.H. Morin proposes a DRM-based architecture to give users access to a Personal Right Management system allowing them to specify and choose the rules and conditions under which they'll be releasing their personal Information on social networks through third party service providers. However, this solution requires the content to remain protected at all times wherever it resides by using strong cryptographic algorithms. Further, it applies only to personal information released by the referred user himself.

In Defamation-Free Networks through User-Centered Data Control N. Sarrouh et al. propose a network architecture where users may control any information published about them. Unlike solutions based on usage control (such as those proposed by DRM systems), this solution focuses on data control and privacy rather than usage rights set by the content creator. It defines mechanisms for centralized and P2P scenarios where users can get an overview of data that identifies them, disregarding who has published it, and ultimately have the possibility to unpublish data about them from a network. This data may be explicitly linked to the referred user, or associated in some other form (e.g. by applying content recognition algorithms).

However, this solution only applies to data inside a single domain, or in some specific cases, to data stored by external trusted platforms with a rigid policy management. In addition, it cannot be applied to users who are not subscribed to the services of that single domain (or, at least, not until they subscribe). Even in the case they propose to be applied in P2P scenarios, the establishment of a web of trust is a prerequisite for the solution to work, effectively showing a degree of trust similar to that of a centralized control approach. Thus, this solution cannot be applied to distributed scenarios where no trust relations have been established between the users referred to by a content (or the nodes representing him) and the content owner or creator (or the nodes representing him).

In Owner-Centric Networking (OCN): Toward a Data Pollution Free Internet, C. Castelluccia and M. Ali Kaafar propose an architecture to provide individuals with control over the contents they publish on the Internet. The described solution provides information consumers with links to the actual information, which is actually stored in trustworthy servers from where the information can be retrieved, modified or even deleted. However, their solution does not prevent malicious entities from copying these contents and publicly modifying and distributing them in the clear. Thus, this solution is not able to guarantee the authenticity or trustworthiness of a piece of information once the information has been publicly disclosed out of the owner-centric network, as is the case of the aforementioned decentralized social networks.

This invention aims at solving out the problems detected in the state of the art by disclosing a method and system that allow users to issue and modify their level of recognition of a statement, as well as allowing other users to query, determine and obtain this level of recognition as trustworthy even in distrusted environments, so as to reduce the operational burden on the users and enable new scenarios in more flexible, secure and efficient ways.

### SUMMARY

This invention discloses a method for trustfully checking the level of user recognition of a statement. The method allows: A verifier to query a controller about a level of user recognition of a statement; a controller to determine, on behalf of the user, the level of user recognition of the statement; and, a verifier to obtain the level of user recognition determined by the controller. The verifier and the controller can be distributed in different network nodes belonging to different administrative domains with no trust relationships set up between them; the essence of the terms referred to in a statement may vary over time; and the level of user recognition of a statement determined by a controller on behalf of a user may also change over time. In particular, this invention is especially useful in settings where the entities issuing statements or managing the terms therein related might not be governed by the users who recognize them, and might be also distributed in different administrative domains between which trust relationships have not been set up.

In this context, a user is an entity whose identity can be authenticated and who is able to recognize statements on his or her own behalf and with responsibility, or by extension, a user is the computer-understandable representation of the digital identity of that entity. For example, and without limiting the generality of the foregoing, a user might be a natural person, but also a legal person , or even a position that proxies the person occupying it. The identity may be represented by a user equipment. Moreover, if a user equipment device or agent is capable of operating under several identities (e.g. associated with different user profiles), each of these identities would correspond to one user in this invention.

A controller is an entity or system that is able, at least, to determine, on behalf of a user, a level of user recognition of a statement, and to transmit a message to a verifier.

A verifier is an entity or system that is able, at least, to obtain or identify a statement, to transmit a message to a controller as described above, and to receive a message from a controller.

A statement is an entity description that is, at least, made up of three elements:
- a subject, i.e. the entity which the statement describes;
- a relationship, i.e. the subject property described by the statement; and,
- an object, i.e. the relationship value that characterizes the subject.

For instance, the statement "This picture was taken in Madrid" contains a subject 'This picture', a relationship 'was taken in', and an object 'Madrid'.

It should be noted that a first statement is semantically equivalent to a second statement when the first subject matches the second object, the first object matches the second subject, and the second relationship is reciprocal to the first relationship. For instance, the statement "This document has been authored by this user" (in which 'This document' is the subject, 'has been authored by' is the relationship and 'this user' is the object) is semantically equivalent to the statement "This user authored this document" (in which 'This user' is now the subject, 'authored' is now the relationship, which is reciprocal to the original, and 'this document' is now the object). In this invention, we consider that every assertion that applies to a first statement is also applicable to any other statement semantically equivalent to the first one (for instance, following the aforementioned procedure).

A level of user recognition is a datum which describes a relationship by which a user acknowledges a statement at a certain moment. For instance, not intended to limit the possible values, some values for the level of user recognition might be 'accept', 'do not accept', 'deny', 'do not deny', 'admit', 'do not admit', etc. In any case, in this context, a level of user recognition can get any value that describes or identifies a relation of recognition of a statement by a user.

The verifier and the controller are usually distributed in different nodes and different administrative domains. Thus, for example, a verifier may be part of a web browser while the controller may be an entity managed by an online social networking provider acting on behalf of its users. In this example, whenever a verifier (the web browser) retrieves a statement concerning a user from an external and possibly untrustworthy domain, then the verifier queries the controller, which is working on behalf of the user, whether the user recognizes this statement. The web browser carries out different actions depending on the response, which is determined by the controller and transmitted to the verifier. If the response implies that the user does not recognize the statement, then the verifier may decide to filter out the statement, thus not rendering it to the user since this statement has not been acknowledged by the concerned user.

For example, a web browser may retrieve a statement such as 'User A has done activity B' from an untrustworthy domain at a certain moment. The verifier then sends a message to the controller working on behalf of User A to check whether User A recognizes that statement. Upon receipt of the message, the controller works out the value of the level of user recognition and sends the result back to the verifier. If the result is positive, the web browser will render the statement. If the result is negative, then the web browser will not render the statement. If there is no answer from the controller, then the web browser will display a warning message such as 'Unchecked Information'. Summarizing: the verifier commonly assists information consumers in improving their trust in the information received, by querying the user's recognition of a statement. The controller represents the user who issues the recognition by determining and sending (after storing or computing) the level of user recognition of a statement to a verifier.

The following example shows the advantages of this invention, where a tagging mechanism in an online social network is introduced as a way to determine and obtain a level of user recognition of a statement. Typically, an online social network includes a web site that allows a first user to set up notifications to be triggered whenever a second user creates tag statements such as "This photograph shows the first user", in which 'the first user' identifies the aforementioned first user. In this way, the first user can react to and access the web page displaying the photograph and the tag that represents the statement related with that first user. Then, if the first user does not recognize this tag, he or she can explicitly request its deletion. However, a centralized online social networking site such as Facebook requires that both the first and second users hold accounts in the same provider, which is not always desirable or possible.

Decentralized online social networking models such as that proposed by OneSocialWeb support different sites belonging to different service providers interoperate with one another. However, all of the sites involved must have previously set up trust relationships between one another for this model to work. This is because the model assumes that whenever a statement is available, the user concerned (i.e. the first user) recognizes it. Yet the mere availability of a statement does not necessarily guarantee that a user recognizes it, e.g. in the case that a trust relationship has not been set up between the domains involved. Continuing with the example, if the first user accesses an untrustworthy web page (in a second domain, different from the first user's domain) which stores and displays the photograph and the tag and requests its deletion, then there is no guarantee that this second untrustworthy domain will honor the request. Thus, the tag may persist in the untrustworthy second domain despite not being recognized by the first user: Unlike the assumptions made by decentralized online social networks (including OneSocialWeb), the availability of statements in untrustworthy domains does not guarantee that the affected users recognize them. That is why these models do not support a third party in trustfully checking with untrustworthy domains whether a user recognizes statements concerning him or her.

It should be noted that this problem cannot possibly be solved by just applying digital signature schemes to decentralized online social network models. This approach would not yield any additional features - apart from those already provided elsewhere by digital signature on its own. Rather, it would just let a user, once notified of a new statement concerning him or her, have the statement digitally signed at the storing provider with his or her private key, in the same way as the user is able to sign any other digital content. However, this solution would never support the user in modifying the expressed recognition of the statement over time, given that, as previously mentioned, once a user digitally signs a content, this cannot be repudiated.

Quite on the contrary, the controller in this invention provides, for each user, a centralized control point to manage dynamically, consistently and homogeneously, on behalf of the user, at least a level of recognition of each statement that may require that user's acknowledgement. That control point thus allows the checking of this level of user recognition faithfully regardless the entity issuing or storing the statement, the administrative domain of this entity, and the trustworthiness of this administrative domain. In this way, users are provided with a control point to manage their levels of recognition of statements scattered through distributed nodes, which may belong to different administrative domains or be untrustworthy.

This invention is not restricted to statements issued, stored or managed in an online social networking context, but may also be used and applied in others such as profile management systems or any system that may somehow issue, verify or manage statements related in any way to the users and requiring their recognition to any degree.

This invention discloses a method, system and computer program to query and obtain a level of user recognition of statements concerning that user in a communications network, according to the features defined by the appended claims.

### BRIEF DESCRIPTION OF THE DRAWINGS

In order to complement the description provided and to support a better understanding of the invention features, embodiments of the present invention shall now be described, in conjunction with the appended figures, in which, and without limiting the generality of the foregoing:
Fig. 1 shows a schematic sequence diagram of the method in one embodiment of the invention;
Fig. 2 shows a schematic sequence diagram of a step of the method in one embodiment of the invention in which the controller sets up a rule;
Fig. 3 shows a schematic sequence diagram of a step of the method in one embodiment of the invention in which a controller sets up a rule by interacting with the user;
Fig. 4 shows a schematic sequence diagram of a step of the method in one embodiment of the invention in which the verifier obtains an integrity parameter from the content of an information resource;
Fig. 5 shows a schematic sequence diagram of a step of the method in one embodiment of the invention in which the controller obtains an integrity parameter from the content of an information resource.

### DETAILED DESCRIPTION OF THE INVENTION

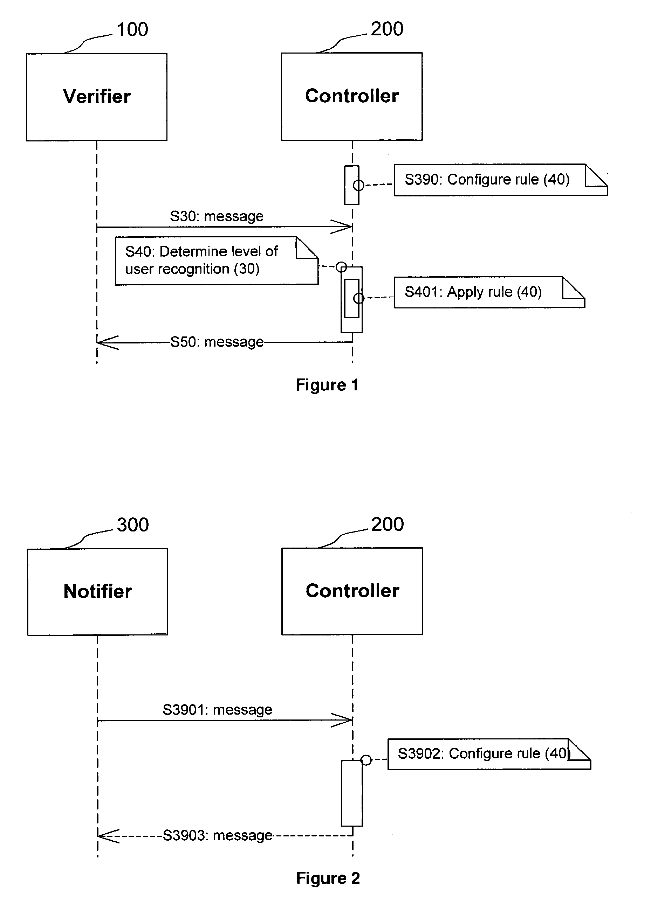

Fig. 1 shows a sequence diagram of a method in one minimal embodiment of this invention. In the method therein illustrated, a verifier transmits a first message s30 to at least one controller 200. The controller, based on at least the information included in the first message, determines s40, on behalf of a user 20, a level of user recognition 30 of a statement 10. Then, the controller transmits a second message s50 to the verifier, including the level of user recognition.

Messages in the context of this embodiment are one or several pieces of information that may be transmitted through a communications channel or network. A first message includes at least a statement or information that allows a statement to be identified or obtained and information that allows a user whose level of recognition is sought to be identified. A second message includes at least a level of user recognition of the statement.

In a preferred realization of this embodiment, the controller 200 provides, over an HTTP endpoint, a REST service interface for each user the controller 200 is working on behalf of. The verifier 100 then transmits s30 an HTTP GET request to one of said endpoints, where the request includes the first message with the statement 10 whose level of user recognition is sought. In this realization, the controller identifies a user 20 as a function of the endpoint where the verifier 100 transmits the first message s30. In an alternative realization of this embodiment, the controller 200 provides just one single endpoint for all of the users on whose behalf it is working and the verifier 100 transmits s30 the user's 20 identifier in addition to the statement 10 whose level of user recognition is sought. In a further alternative realization of this embodiment, the verifier 100 transmits s30 a statement 10 identifier to the controller 200, and the controller 200 obtains the statement 10 using this identifier.

After that, the controller 200 determines s40, on behalf of the user 20, a level of user recognition 30 of the statement 10, as received from the verifier 100. In a preferred realization of this embodiment, the controller 200 includes a rule-based inference engine and determines s40, on behalf of the user 20, a level of user recognition 30 of a statement 10 by applying s401 a rule 40. When the controller 200 receives a message s30, it checks whether there is some rule 40 applicable to the statement 10 and the user 20 referred to by the message s30. If so, then the controller applies s401 the said rule 40 to determine s40 the level of user recognition 30. Otherwise the controller 200 determines s40 a default value as the level of user recognition 30 (e.g. 'false').

In this context, a rule is a set of operations associated to at least one statement, which a controller has to carry out in order to determine, on behalf of a user, a level of user recognition of a statement. These rules can involve local operations as well as requests to remote entities. The rules are configurable and can cope with different situations that may vary over time. The simplest rules may determine a level of user recognition depending solely on the user and the statement, and they may affect one or many users. A rule can determine the level of user recognition of more than one statement and a level of user recognition of a given statement can be determined by different rules.

Thus, an example rule may declare: Given a user and a statement, if the user is 'User A' and, the statement is any "User A is Spanish" or "User A's first name is Juan" or "User A is an engineer", then the level of user recognition gets the value "True". Another example rule may declare: Given a user and a statement, if the user belongs to group B and the statement is "the user has feature C", then the level of user recognition gets the value "True". Or even, by applying access control lists, an example rule may declare: Given a user and a statement, if the verification request was transmitted by a verifier belonging to a domain included in the blacklist XXX, then the value of the level of user recognition is "False". It would also be possible to determine the level of user recognition by directly interacting with the user concerned so that he or she can determine on demand the value of the said level of user recognition on his or her own, every time the controller receives a request.

Before the controller 200 applies s401 the rule 40, this rule must have been configured s390 in the controller 200. The configuration s390 may have been carried out in different ways. One option is that the user sets up some criteria to configure rules in the controller. In a preferred realization of this embodiment, the rules are already configured by the controller default setup. This allows a controller to determine, on behalf of a user, a level of user recognition of a statement with little or no intervention by the said user.

For example, a rule can determine a level of user recognition by applying access control lists, depending on the verifier's 100 administrative domain, or the verifier's 100 network address, or the identity of the user on whose behalf the verifier 100 is working, etc. By applying access control lists, it is also possible for the controller to determine s40 a value 'false' or 'not recognized' as the level of user recognition if the source of the first message s30 is not authorized to check the said level of user recognition 30 of the statement 10.

Eventually, the controller 200 transmits s50 a second message to the verifier 100. In a preferred realization, the controller 200 transmits an HTTP response to the HTTP GET request sent s30 by the verifier 100. This HTTP response includes as an HTTP response code the value '200 OK' and as an HTTP payload the value for the level of user agreement 30, as determined s40 by the controller 200. In an alternative realization, the controller 200 and the verifier 100 transmit s30 and s50 as message payload in an XMPP protocol extension.

The Security Assertion Markup Language (SAML) allows assertions regarding a user to be exchanged, between an assertion provider and an assertion consumer. SAML may also be useful as a mere transport protocol (like any other transport protocol such as HTTP) in order to exchange messages between the verifier and the controller.

Before transmitting the first message s30, the verifier must select - based on the available information about both the user and optionally the statement- the controller (and optionally the controller's endpoint) working on behalf of the user whose level of recognition is sought or hosting the service that allows the level of user recognition to be obtained. This allows different controllers, probably operated by different providers, to serve different users, so that a user can choose a provider and controller according to his or her preferences and/or requirements regarding the service delivered by each provider. In addition, several controllers may work on behalf of the same user; with different configurations that may, for example, cover different types of statements. In case the verifier needs to associate the identity of a controller's user in a trustworthy manner to a given person, then the verifier shall have obtained that trust beforehand, by means out of the scope of this invention.

Thus, for example, in a preferred realization the user 20 is identified by a user identifier according to the Webfinger protocol. By using the user's Webfinger identifier, a verifier 100 obtains an XRD document containing the controller endpoint where levels of user recognition are issued on behalf of the user 20. The endpoint is indexed by the corresponding service identifier (either a URI or a name registered at IANA for this service). Another means of identifying the user 20 might be his or her WebID or Jabber Identifier (JID).

In one embodiment of this invention: The verifier has previously associated a person with a user identifier in a trusted manner (for instance, the verifier may access the user identifier digitally signed with a signature certified by a Certificate Authority trusted by the verifier); the statement 10 is represented as a statement in accordance with the Resource Description Framework (RDF) wherein each element of an RDF statement (subject, predicate/relationship and object) respectively matches the essential parts of a statement; and the level of user recognition is represented as a variable that can assume either the value true (the user recognizes the statement) or the value false (the user does not recognize the statement). In an alternative realization, a level of user recognition 30 can assume any value in the set of real numbers between 0 and 1 (where 1 is the maximum possible level of user recognition and 0 is the minimum). In a further alternative realization, the statement 10 is represented as an activity entry in accordance with the Atom Activity Extensions specification (http://activitystrea.ms/spec/1.0/atom-activity-01.html) wherein each element of an activity entry (activity:subject, activity:verb and activity:target) respectively matches the essential parts of a statement.

In one embodiment (figure 2), the step through which a controller configures s390 a rule includes that a node called notifier 300 transmit a first message to a controller 200 and the controller 200 configure s3902 a rule. This first message may include a statement or information that allows a statement to be obtained or identified, and information that allows identifying a user of the controller.

This embodiment allows entities external to the controller (notifiers) to notify the controller about the existence of statements of which a verifier might subsequently request a level of user recognition to that controller. Hence the controller can anticipate this possible request from a verifier and configure a rule for the said statement so that the level of user recognition of the statement is available in advance. In other words, the notifier feeds the controller with statements concerning the user. Thus, a notifier may notify the controller of a new statement the controller was not aware of, or a modification in the essence of the terms of a statement that the controller already knew, or the deletion of a statement the controller already knew.

For example, a notifier may be part of an online social network and notify a controller, in the same or another online social network, of one of the controller's users having been tagged in a photograph (i.e. a statement concerning the said user has been issued). A notifier might also operate independently by crawling the Web in search of statements concerning users (somehow similar to the way search engines such as Google crawl the Web searching information) and transmitting notifications to the controllers that work on behalf of such users.

Optionally, in some cases and for the sake of convenience, the controller might transmit s3903 a second message to the notifier specifying whether or not the user recognizes the statement -although this is not its main feature.

In a preferred realization of this configuring step s390, the controller 200 provides, for each user 20 the controller 200 is working on behalf of, an asynchronous REST service interface on an HTTP endpoint. In this preferred realization a notifier 300 transmits s3901 a REST POST request over HTTP to the controller's endpoint serving the user 20 which includes a first message containing the statement 10 that the notifier 300 aims to notify. Upon receiving the said first message, the controller 200 configures s3902 a rule to determine a level of user recognition of the statement 10 by the user 20.

From the statement notification, the controller configures s3902 a rule to determine, on behalf of a user, a level of user recognition of those statements which have been notified to the controller. In the context of this invention, configuring a rule includes setting up the controller so that, from that moment on, the controller will determine a value for a level of user recognition of a statement on behalf of a user.

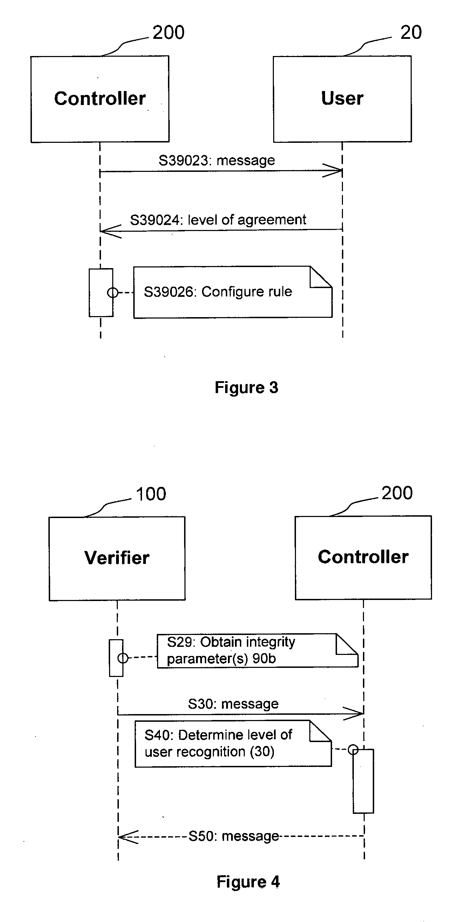

In one embodiment, the step through which the controller configures a rule includes at least that the controller transmit a first message to a user that includes at least a statement; the user transmit to the controller a second message that at least includes a level of user agreement with the statement; and the controller configure a rule depending on the said level of user agreement with the statement. For example, when the statement is 'User A appears in this photograph', and if User A does not recognize himself or herself in the photograph, then the controller configures a rule such as: "If user is 'User A' and statement is 'User A appears in this photograph', then determine a level of user recognition with value 'False' or 'Do not recognize' ". Figure 3 shows an example of this embodiment.

In a preferred realization of this embodiment, the user 20 has an application installed in his or her user equipment which is able to receive messages from and send messages to a controller 200 working on behalf of the user 20. The controller 200 transmits s39023 a message, which includes a statement 10, to the application in the user equipment, and the application then shows this information to the user 20. The user 20, on interacting with the application, can state a level of agreement 50 with the statement 10 from among those available. In this realization, the level of agreement 50 takes the boolean values either 'true' or 'false'. In an alternative realization the controller 200 might also communicate with the user 20 through a Web-based graphical user interface.

Once the user 20 has chosen a value for the level of agreement 50, the application in the user equipment transmits s39024 this value to the controller 200. The controller 200, after receiving the message s39024, configures s39026 a rule 40 that determines the value for the level of user recognition 30 of the statement 10 as the same value of the level of user agreement 50. In the context of this invention, configuring a rule includes setting up the instructions to the controller so that, from that moment on, it will determine a level of user recognition of a statement on behalf of a user.

There may be other variables that the controller may consider in order to determine the level of user recognition and which may make this value differ from the value of the level of user agreement 50 as initially expressed by the user 20. For example, the controller 200 may enforce access control lists and reply with s50 a level of user recognition 30 valued 'false' ('not recognized') to those queries s30 requested from administrative domains badly reputed to the controller 200, or from individuals or entities unauthorized by the user 20 to retrieve the level of user recognition 30 of a statement 10 concerning particular areas of the user's 20 life, etc.

It is even possible that the step through which a controller configures a rule includes the application of at least one meta-rule. This step spares the user from expressing his or her level of agreement with each and every single concerning statement notified to the controller. In the context of this embodiment, a meta-rule is a set of operations that the controller carries out to configure a rule which determines, on behalf of a user, a level of user recognition of a statement. Meta-rules usually set up the controller to determine a level of user recognition based on the group or list to which the statement - or the entity that issued the said statement - belongs.

An example of a meta-rule follows. The controller has a list of those hosts or domains that are under control of User A, thus the meta-rule would read "All statements issued by these hosts or domains are true". As a result, for each statement 10 notified from those hosts or domains permitted, a rule will be configured: "The said statement 10 is true".

Before the controller applies a meta-rule to configure a rule, a user may transmit at least one meta-rule to configure at least one rule to a controller. Then, the controller sets up the received meta-rules to be applied thereafter. Alternatively, the controller may have been previously configured with one or more meta-rules - for instance according to a default controller setup - to configure one or more rules to determine, on behalf of a user, a level of user recognition of a statement.

Regarding the elements that make up a statement, both the subject and the object may include the identifier of an information resource, or include the content associated with an information resource, or include information that allows the content associated with an information resource to be obtained. An information resource is a digital object which, at least, has an associated content that may be retrieved and perceived by a user, either directly or by using a processing device or tool. Optionally, an information resource may have an identifier and/or locator to retrieve the content associated with the information resource.

A statement may also include a user identifier as either subject or object; specifically, a statement may include the identifier of the user 20 concerned by the statement.

In a preferred realization, where the statement 10 is expressed as an RDF statement, the object of the statement identifies a user 20 after the user's WebFinger identifier, and the subject of the statement 10 identifies an information resource 80 by an RDF URI. In this preferred realization, the RDF URI is an HTTP URL which allows the content 81 of the said information resource 80 to be retrieved by means of an HTTP GET request. In an alternative realization, still semantically equivalent to the aforementioned, the subject of a statement 10, expressed as an RDF statement, identifies a user 20 after the user's WebFinger identifier, and the object of the statement 10 identifies an information resource 80 through an RDF URI which allows the content 81 of the said information resource 80 to be retrieved. In a further alternative realization, the subject of a statement 10, expressed as an RDF statement, identifies a user 20 after the user's WebFinger identifier and the subject of the statement 10 is the content 81 of an information resource 80.

This allows controllers to specialize in determining levels of user recognition of statements that relate an information resource with a user. For example, this enables scenarios where a user can recognize statements expressed as metadata (as long as the metadata identify at least a subject, a relationship and an object of the statement) describing information resources such as images, videos or audios. For instance, a verifier may ask a controller to determine, on behalf of a user, up to what extent the user recognizes that an information resource, such as a photograph, 'was shot by' or 'was produced by' the said user. In a further example described for the sake of illustrating the method, a verifier may ask a controller to determine, on behalf of a user, up to what level the user recognizes that he or she 'authored' or 'produced' an information resource such as a video movie file.

In these cases, the controller 200 is able to use data regarding the information resource 80 identified in the statement 10, in order to determine the level of user recognition. For example, a controller 200 may determine that a level of user recognition 30 assumes the value 'true' for every statement 10 where the user 20 is related in the role of author of an information resource 80 stored by a given domain (domain deemed under the control of the user 20 or trusted by the controller 200).

According to the above description, the user 20 concerned by a statement 10 may be identified in one of the terms of this statement. Notwithstanding, a user 20 concerned by a statement may be also related to that statement by other means. For example, in a realization, the verifier departs from the relationship stated in an RDF statement 10 and obtains the identifier of a user related to the said statement and whose level of recognition is sought. For instance, the verifier obtains, by means out of the scope of this invention, the identifier of a user 20 who is related to the statement 10 for being an authority on the topic of the relationship stated in the said statement 10.

In one embodiment, the verifier has been configured to receive updates on the level of user recognition determined by a controller and the controller creates and transmits the said updates. In this embodiment, the verifier transmits s30, to the controller, within the first message, information that identifies an endpoint of the verifier, where the verifier receives updates on the level of user recognition of a statement.

In a preferred realization of this embodiment, the verifier transmits s30, to the controller, within the first message, an HTTP URL that identifies a REST service interface over an HTTP endpoint where the verifier receives updates on the level of user recognition. The controller determines s40 a level of user recognition of the said statement according to the method of this invention, and it also stores: the endpoint where updates to the verifier should be transmitted, the statement and the level of user recognition determined. Later on, whenever a rule related to a statement is modified, the controller then again determines the level of user recognition of the statement thus resulting in a new level of user recognition. The controller compares both the new level of user recognition and the last one transmitted to the verifier and, if they are different, transmits an HTTP PUT request to the stored endpoint of the verifier, including or identifying the new level of user recognition and the statement the said level refers to. In addition, the controller updates the information stored with the new level of user recognition associated to the statement and the verifier endpoint.

In one embodiment, the controller, before configuring a rule, retrieves the content of an information resource included or identified in the statement (for example, a video or a photograph), applies a function 91 to the content retrieved to obtain the integrity parameters 90a, and uses these integrity parameters 90a to configure a rule that includes an integrity check procedure (that is, the controller configures a rule to determine the level of user recognition considering whether the integrity of the content has been preserved).

In this context, a function to obtain integrity parameters is a function which, when applied to a content, allows a set of parameters to be obtained that are used as input to an integrity check procedure. Some examples of functions to obtain integrity parameters are the SHA-1 hash function applied to the content, the binary serialization of the content, or a function that computes an acoustic fingerprint such as that of AudioID.

An integrity check procedure is a method for, departing from at least one or several integrity parameters regarding a first content and one or several integrity parameters regarding a second content, obtaining an output that shows whether the first and second contents are equivalent. The term 'equivalent' must be understood in the context of a particular integrity check procedure, given that two contents may be semantically equivalent, or perceptually equivalent, or bit-to-bit equivalent, etc. One example of an integrity check procedure is that which gets the results of applying the SHA-1 hash function to two contents as inputs, compares them and checks whether they are equal. Another example of an integrity check procedure is that which receives the results of binary-serializing the two contents as inputs and checks whether they are equal. A further example of an integrity check procedure is that which receives the acoustic digital fingerprints of the two contents as inputs and checks whether they are perceptually equivalent. Thus, this last procedure would determine that a piece of mp3-encoded audio is perceptually equivalent to the same piece OGG-encoded, even though the binary serializations of the two encodings - and even their respective waveforms- are completely different from each other.

It should be noted that some integrity check procedures do not require the same function to be applied for obtaining all the integrity parameters. For example, an integrity check procedure may take the result of applying a hash SHA-1 to the first content as one input, and the binary serialization of the second content as another input.

In this embodiment, before the step by which the verifier transmits a first message at least to a controller, the method includes a step (figure 4) through which the verifier retrieves the content of the information resource identified in the statement, and applies the function 91 to the said content to obtain s29 one or several integrity parameters 90b. In addition, in this embodiment, the step by which the verifier transmits a first message at least to a controller includes that the verifier transmit the one or several integrity parameters 90b obtained by the verifier and, optionally, information that identifies or includes the function 91 applied to obtain the integrity parameters.

Next, the controller determines, on behalf of the user 20, a level of user recognition 30 of the statement 10 sent by the verifier, by applying the rule including an integrity check procedure that uses the integrity parameters 90a and 90b as inputs. The integrity check procedure compares both integrity check parameters to check whether the contents are equivalent and, thus, the integrity has been preserved.

In a preferred realization of this embodiment, the controller retrieves s39021 the content 81 of an information resource 80 (for instance, using its RDF URI which is an HTTP URL) and applies a function to the said content (for instance, an SHA-1 hash function) to obtain s39025 an integrity parameter 90a, which the controller stores. Then, once the controller has obtained the level of agreement from the user, the controller configures s39026 a rule to determine the level of user recognition, which includes the integrity check procedure as follows:
- If the value of the parameter 90a is the same as the value of the parameter 90b (which means that the content 81 has kept its integrity preserved), then assign the value of the level of agreement that the user transmitted to the value of the level of user recognition of the statement.
- Otherwise, if the content has not kept its integrity preserved, then assign the value 'not recognized' to the level of user recognition of the statement.

In the said preferred realization, the verifier 100 retrieves the content 81 of an information resource 80 from its RDF URI which is an HTTP URL, and obtains s29 the integrity parameter 90b by applying an SHA-1 hash function 91 to the content 81 of the information resource 80. In this preferred realization, the verifier 100 includes the integrity parameter 90b together with the information the verifier transmits s30 to the controller 200 in the first message, where the statement to be verified is identified. In this first message the function 91 applied to obtain the integrity parameters is also identified.

In this preferred realization, the controller determines s40 the level of user recognition 20 of the statement 10 transmitted by the verifier, by applying the previously configured rule which involves comparing the integrity parameters 90a and 90b according to the aforementioned steps.

This integrity check is useful in a distributed and untrustworthy context where the entity that stores an information resource, the entity that stores a statement relating a user with the information resource, a verifier, and a controller belong to different administrative domains which have no underlying trust relationships set up with one another. In this scenario, this embodiment supports a verifier, once it has obtained a level of user recognition of a statement as determined by a controller, in assuring that the essence of the terms related by the statement has kept its integrity preserved from the moment the rule was configured to the moment the rule is applied. In particular, the method guarantees that the content of the information resource the controller retrieved when the rule was configured is essentially equivalent to the content the verifier retrieved when it queried the controller. For example, this embodiment allows a verifier that has obtained a level of user recognition of a statement which, for instance, relates the user with a photograph, to ensure that the controller has determined a level of user recognition of a photograph not differing from that photograph the user expressed his or her level of agreement with. The method thus prevents a verifier from obtaining a positive level of user recognition from a controller when a malicious entity has modified the photograph. Otherwise, were this integrity check not carried out, then the controller would be issuing a level of user recognition of an information resource with a certain identifier and associated content (the one the controller retrieved when configuring the rule); while the verifier could be regarding the said level of user recognition as that of an information resource with the same given identifier but with an associated content different from the one the controller had retrieved. Besides, given that the inputs to the integrity check procedure correspond to both the content as retrieved by the verifier and the content as retrieved by the controller, then the method would detect a distrusted entity maliciously managing the information resource and providing different contents depending on the requesting entity (for instance, to the verifier or the controller).

Alternatively, the verifier may carry out some parts of this method, in which case the controller transmits s50, to the verifier, in addition to the level of user recognition, one or several integrity parameters 90a obtained by applying the function 91 to the content associated to a statement. In turn, the verifier applies the function 91 to the content 81 of the information resource 80 included or identified in the statement to obtain one or several integrity parameters 90b. Eventually, the verifier applies the integrity check procedure taking 90a and 90b as inputs and, if they are not equivalent (the content integrity has not been preserved), then the verifier assumes a value 'false' for the level of user recognition regardless the value of the level of user recognition 50 received from the controller.

In one embodiment, before obtaining an integrity parameter 90b, the verifier 100 starts a negotiation procedure with a controller 200 in order to agree on the function 91 to apply to obtain integrity parameters. In this embodiment, the verifier 100 depends on the user's 20 WebFinger identifier to obtain a controller 200 endpoint where an HTTP GET request must be sent in order to obtain information regarding the function 91 to be applied. In response, the controller 200 transmits the identification of a function 91 to the verifier 100 as payload in the response to the HTTP GET request.

The function 91 may be also chosen according to the MIME type of the content 81 - an identifier of the function 91 applied may be added to the messages exchanged between the verifier and the controller, in order to ensure they are using the same function.

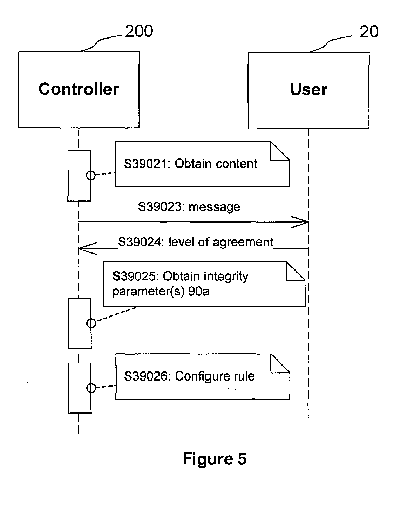

In one embodiment, illustrated in figure 5, the controller transmits s39023 the content of the information resource included or identified in the statement (e.g. a video or a photograph) to the user in addition to the statement. The user receives the said content and then transmits s39024 his or her level of agreement with the statement in a message to the controller. In a preferred realization, this embodiment is carried out by means of an application installed in the user equipment which is able to receive and transmit messages to and from the controller, and to display contents and statements to the user. Then, as described in the previous embodiment, the controller configures s39026 a rule to determine the level of user recognition which includes the integrity check procedure.

In one embodiment, the method includes that a controller transmit at least one statement to the user with which the user has already expressed a level of agreement. According to his or her preferences, the user modifies the level of agreement and transmits this information to the controller. The controller then updates and modifies the one or several rules related to the statement in accordance with the information received.

In one embodiment, the method includes that a user take the initiative to transmit a level of agreement associated with a statement to the controller. If necessary, the controller configures, updates and modifies the one or several rules related to the statement in accordance with the information received.

In one embodiment, the method includes that a controller retrieve the content 81 of an information resource 80 associated to a statement 10 with which the user 20 has already expressed a level of agreement, and apply a function 91 to the content 81 to obtain the integrity parameters 90c. The controller checks the content integrity by comparing the parameters 90a (obtained at the time the user transmitted his or her level of agreement) and 90c. In this embodiment, the controller transmits at least the output of the integrity check to the user in addition to the statement and the associated content.

This embodiment allows the controller to transmit information to the user regarding whether the content of the information resource has been modified since the moment the user expressed his or her level of agreement with the statement, so that the user has additional information at his or her disposal to decide whether to modify his or her level of agreement with a statement that relates the user with an information resource.

A controller usually includes at least a first receiver, a determiner and a first sender. The first receiver is configured to receive a first message from a verifier which at least includes one statement or information that allows one statement to be obtained or identified, and information that allows one user of the controller to be identified (in this context, a verifier is an entity or system that is able to obtain and identify a statement). The determiner is configured to determine a level of user recognition of a statement on behalf of a user. The determiner may be configured to apply at least one default rule, or to allow a user to configure at least one applicable rule, or to allow configuring at least one rule based on at least one meta-rule. The first sender is configured to transmit a second message to a verifier which may include or identify at least a level of user recognition of a statement.

The verifier includes at least a first sender and a first receiver. A first sender is configured to transmit, to the controller, a first message which includes at least a statement or information that allows a statement to be obtained or identified, and information that allows identifying a user of the controller. The first receiver is configured to receive, from a controller, a second message that may include or identify at least a level of user recognition of a statement.

Each of the aforementioned elements, of both a controller and a verifier, may be implemented on hardware, software, firmware, a field-programmable gate array (FPGA), application-specific integrated circuits (ASICs), or the like.

Although the present invention has been described on the basis of detailed examples, these only serve to provide the skilled person with a better understanding, and are in no way intended to limit the scope of the invention, much rather defined by the appended claims.

Some examples on how this invention may be used include: The comment system in an online discussion forum site may record comments issued by different users, plus statements describing metadata associated to these comments, such as their author, publication date, etc. These statements may be recognized by the user of a controller according to the description of the invention; in particular, if the author of the comment is identified by a compatible identifier, then it is straightforward to query the controller associated to the said user identifier whether this user recognizes such statement (the one that relates the user as author of the statement).

Another example is a service for tagging photographs with people's names (for example, in an online social networking site) in which a person is identified as appearing in a photograph. This identification results in a statement being associated to the photograph, in which the statement relates a photograph to a given person. This tagging service may work as a notifier according to this invention, thus notifying statements to the controller associated to the user tagged in the photograph. The controller might report the level of user recognition (e.g. upon asking the user) to the notifier, and the tagging service may consequently behave and honor the said level of user recognition - e.g. deleting the tag if the user does not recognize it. It might also happen that a malicious tagging service tags a photograph with multiple users even though the said users in fact do not appear in the photograph, aiming at improving the popularity of the photograph. In either two cases, a verifier which finds the statement relating a user with a photograph will be able to query the controller associated to that user and check (as long as the user has been properly notified) whether the user recognizes the said statement which states his or her appearance in the photograph. Thus, the verifier may check the acknowledgement of legitimately tagged persons, ruling out those tags not acknowledged positively by the tagged users.

In summary, the advantages of this invention over the known state of the art are, among others, as follows:
1. The user is able to modify levels of recognition over time. For example, when a digital signature scheme is used, once a user has digitally signed a statement, then it is not possible to check whether the user has later modified his or her level of recognition of the said statement; however, according to this invention the user is able to configure the controller at any time so that it modifies his or her level of recognition of a statement.
2. This method can be applied to scenarios with several distributed domains. Thus, the administrative domain of the user issuing the level of recognition, the administrative domain where the statement is stored, and the administrative domain where the information resource related by the statement is stored may all be different. We may affirm that the statement and each one of its terms may be managed by different administrative domains.
3. The aforementioned different administrative domains do not have any underlying trust relationships set up with one another; nonetheless, this fact does not result in any decrease in the guarantees for the verification process.
4. The level of user recognition of a statement can be explicitly expressed.

There are technologies in the technical field of this invention in decentralized online social networks but, unlike this invention: They do not define mechanisms to verify that the user related to the content of the statement has recognized this statement as truthful. In addition, if the different administrative domains do not trust each other, existing technologies in decentralized online social networks cannot guarantee that a statement or its related content have not been modified, thus lacking any guarantees on the verification process. Therefore, in an untrustworthy environment, none of the decentralized online social networking models consider the possibilities of carrying out this verification process in an explicit way, or the user being able to modify the level of user recognition of a statement while providing guarantees that the retrieved information (statement and associated content) has not been modified since the user recognized it.

The nature of the invention having been sufficiently described, as well as the way of realizing it, the possibility of manufacturing its different elements in several materials, sizes and shapes shall be stated, it also being possible to introduce in its makeup or procedure those changes the experience suggests.

## Claims

1. Method for querying and obtaining a level of user recognition of statements concerning said user in a communications network, in which the method includes the following steps:
a) At least one first node of the network, called the controller (200), configures and stores at least one rule associated to each statement, determining said rule, on behalf of the user, the level of user recognition of the statement associated to said rule;
b) a node of the network, called the verifier (100), different from the controller (200) and belonging to a different administrative domain from the controller's, retrieves a statement
c) upon retrieving the statement, the verifier (100) accesses the contents of the statement and selects, based at least on the information included in the statement, the user whose level of recognition the verifier (100) wants to determine, said statement concerning the user;
d) upon selecting the user, the verifier (100) selects depending, at least, on the user's identity, the end point of the controller (200) managing the levels of user recognition on behalf of said user;
e) the verifier (100) transmits, through a communications channel of the communications network, a first message to the controller (200) which includes at least said statement or information that allows said statement to be identified, as well as information that allows said user to be identified;
f) upon receipt of the first message, the controller (200) chooses, from among the rules previously configured and stored at the controller (200), at least one rule to apply in order to determine, on behalf of said user, the level of user recognition of said statement;
g) the controller (200) determines on behalf of said user a level of user recognition of said statement by applying at least said one rule associated to that statement, as chosen in the previous step;
h) the controller (200) transmits a second message to the verifier (100) which includes or identifies the level of user recognition of said statement.
Wherein the controller (200) can modify, at least a rule previously configured to determine the level of user recognition of a statement associated to said rule, at any moment before or after applying said rule and before or after transmitting the second message from the controller (200) to the verifier (100), in such a way that modifying the rule results in the modification of the level of user recognition of the statement to which the rule is associated
and wherein the statements for which the controller (200) determines a level of user recognition, are stored or issued by entities deployed on different network nodes or belonging to different administrative domains which have no underlying trust relationships set up with either the controller (200) or the verifier (100).

2. A method according to claim 1, where the statement concerning said user whose level of user recognition is obtained, has been issued by a second user different from the said user.

3. Method according to any of the previous claims, further including the following steps: if at any given moment after transmitting the second message from the controller (200) to the verifier (100), the controller (200) modifies a rule applicable to the statement included or identified in the first message
- the controller (200) applies, at least, said modified rule to said statement in order to obtain a new level of user recognition and
- the controller (200) transmits a new message to the verifier (100) which sent said first message, wherein the new message includes or identifies said statement and the new level of user recognition of said statement, as just obtained by the controller (200).

4. A method according to any of the previous claims, in which in step c) the verifier (100) selects the user whose level of recognition is sought, departing from a relationship stated in the statement.

5. Method according to any of the preceding claims, further including:
- a network node, called the notifier (300), different from the controller (200) and the verifier (100), upon noticing a new or existing statement in the network concerning the user or the modification or deletion of a statement in the network concerning the user, transmits a message to the controller (200) through the communications network which, at least, includes a statement or information that identifies the statement, as well as information that identifies the user concerned by the statement;
- the controller (200), upon receipt of the statement from the notifier (300), if there is no existing rule to determine the level of user recognition of said statement, then configures at least one rule to determine the level of user recognition of said statement; and if there is otherwise a rule to determine the level of user recognition of said statement, then the controller (200) decides whether to modify that rule.

6. Method according to any of the preceding claims, where one of the elements included in a statement identifies an information resource with a certain associated content, which may be a photograph, a text, a video or any other type of content; and where either the verifier (100) or the controller (200) checks that the content has had its integrity preserved from the moment that the rule associated to said statement was configured to the moment that the verifier (100) obtains said content; and in which the definitive value determined for the level of user recognition depends on that preservation of the integrity.

7. Method according to any of the preceding claims, in which one of the elements included in the statement identifies the user concerned by the statement .

8. Method according to any of the preceding claims, in which the step where the controller (200) configures at least one rule to determine, on behalf of a user, a level of user recognition of a statement includes:
- the controller (200) transmits a message to a user which, at least, includes or identifies the statement;
- the user transmits a message to the controller (200) which, at least, includes or identifies a level of user agreement with said statement;
- the controller (200) configures, depending, at least, on the level of user agreement received from the user, at least one rule to determine, on behalf of the user, a level of user recognition of said statement.

9. Method according to any of the claims 1 to 7, where the step where the controller (200) configures, at least, one rule to determine, on behalf of a user, a level of user recognition of a statement includes:
- the user transmits a message to the controller (200) which, at least, includes or identifies a statement and a level of user agreement with said statement, and the user can repeat this step at any time to modify the level of user agreement with said statement;
- the controller (200) configures, depending at least on said level of user agreement received from the user, at least one rule to determine, on behalf of the user, a level of user recognition of said statement.

10. Method according to any of the claims 1 to 7, where the step where the controller (200) configures at least one rule to determine, on behalf of the user, a level of user recognition of a statement, is automatically carried out without requiring user intervention in case the statement fulfils a set of conditions which indicate that the statement is included in a specific group of statements.

11. Method according to claim 8, in which one of the elements of a statement identifies an information resource with a certain associated content, and where:
- the controller (200) retrieves the content of the information resource identified in the statement; and
- the controller (200) also includes, in the message that at least includes or identifies the statement, to be transmitted to the user, the content of the information resource identified in the statement.

12. Method according to claim 1, in which one of the elements of a statement identifies an information resource with a certain associated content, and where:
the step a) where the controller (200) configures at least one rule to determine, on behalf of a user, a level of user recognition of a statement, further includes
- the controller (200) retrieves a content associated to the information resource identified in the statement, and
- the controller (200) applies a function to said content to obtain a first integrity parameter;
the step b) where the verifier (100) retrieves a statement, further includes
- the verifier (100) retrieves a content associated to the information resource identified in the statement, and
- the verifier (100) applies a function to said content to obtain a second integrity parameter;
step e) where the verifier (100) transmits a first message to the controller (200) further includes
- the verifier (100) transmits, within the first message, in addition, the second integrity parameter to the controller (200);
step g) where the controller (200) determines, on behalf of a user, a level of user recognition, further includes:
- the controller (200) compares the first integrity parameter with the second and, only if they are equivalent according to an integrity check procedure, then the controller (200) considers that the integrity of the content has been preserved and determines the level of user recognition of the statement as the result of applying the stored rule.

13. Method according to claim 1, in which one of the elements of a statement identifies an information resource with a certain associated content, and where:
the step a) where the controller (200) configures at least one rule to determine, on behalf of a user, a level of user recognition of a statement, further includes
- the controller (200) retrieves a content associated to the information resource identified in the statement, and
- the controller (200) applies a function to said content to obtain a first integrity parameter;
step b) where the verifier (100) retrieves a statement, further includes
- the verifier (100) retrieves a content associated to the information resource identified in the statement, and
- the verifier (100) applies a function to said content to obtain a second integrity parameter;
step h) where the controller (200) transmits a second message to the verifier (100), further includes
- the controller (200) also transmits, within the second message, the first integrity parameter to the verifier (100);
And where the method further includes after step h):
- the verifier (100) compares the first integrity parameter with the second and only if they are equivalent according to an integrity check procedure, then the verifier (100) considers that the integrity of the content has been preserved and regards the level of user recognition of the statement as the level of user recognition received from the controller (200).

14. Method according to claim 1, in which the at least one rule determines the level of user recognition depending on the administrative domain of the verifier (100) or its network address or the identity of the user on whose behalf the verifier (100) is working.

15. System for querying and obtaining a level of user recognition of statements concerning said user in a communications network, where the system comprises:
At least a first network node, called the controller (200), which configures and stores, on behalf of a user, at least one rule associated to each statement; determining said rule, on behalf of that user, the level of user recognition of the statement associated to said rule; where said rule can be modified at any time, and where said statements for which the controller (200) configures the rules are stored or issued by entities deployed on different network nodes belonging to different administrative domains.
At least a second network node, called the verifier (100), which belongs to a second administrative domain different from the controller's, including:
- means for retrieving a statement and for, upon retrieving the statement, accessing the contents of the statement and selecting, based at least on the information included in the statement, the user whose level of recognition the verifier (100) wants to determine, said statement concerning the user, and for, upon selecting the user, selecting, depending on the user's identity, the end point of the controller (200) managing the level of user recognition on behalf of said user, and
- means for transmitting, through a communications channel of the communications network, a first message to the controller (200) which includes at least said statement or information that allows said statement to be identified, as well as information that allows the user whose level of recognition is requested to be identified, and
- means for receiving from the controller (200), through a communications channel of the communications network, a second message which includes, at least, the level of user recognition requested.
And where said controller (200) includes:
- means for, upon receipt of the first message from the verifier (100), choosing, from among the rules previously configured and stored, at least one rule to apply to said statement; determining, on behalf of said user, a level of user recognition of said statement by applying, at least, said at least one rule associated to that statement; and transmitting a second message to the verifier (100) which includes or identifies the level of user recognition of the statement, and
- means for:
- updating the configuration of at least one previously configured rule according to a rule-modification command received by the controller (200) at any time;
- applying the updated rule to each statement, if any, to which the rule had been ever applied to determine, on behalf of the user, a level of user recognition, thus obtaining a new level of user recognition; and
- transmitting said new level of user recognition, just obtained, to each verifier (100) that originally submitted said statement, identifying as well the statement to which said new level of user recognition applies.

16. System according to claim 15, further including:
- a network node, different from the controller (200) and the verifier (100), called the notifier (300), which, upon noticing a new or existing statement in the network concerning said user or a modification or deletion of a statement in the network concerning said user, transmits a message to the controller (200) through the communications network which, at least, includes the statement or information that identifies the statement, as well as information that identifies the user of the controller (200) concerned by said statement.
And in which the controller (200) includes means for, upon receipt of the statement from the notifier (300), checking whether there is an existing rule to determine the level of user recognition of said statement, and
in that case, deciding whether to modify the existing rule, and
otherwise, configuring a new rule to determine, on behalf of said user, the level of user recognition of said statement , and storing said rule.

17. Computer program comprising instructions configured to carry out the steps of the method in accordance with any one of claims 1 to 14 when executed on a computer, a digital signal processor, a field-programmable gate array,FPGA, application-specific integrated circuits,ASICs, a microprocessor, a microcontroller, firmware or the like, including a distributed one.

## Patentansprüche

1. Verfahren zum Abfragen und Erhalten einer Ebene der Benutzererkennung von Aussagen, die den Benutzer betreffen, in einem Kommunikationsnetzwerk, wobei das Verfahren die folgenden Schritte einschließt:
a) mindestens ein erster Knoten des Netzwerks, als der Controller (200) bezeichnet, konfiguriert und speichert mindestens eine Regel, die mit jeder Aussage assoziiert ist, wobei die Regel im Namen des Benutzers die Ebene der Benutzererkennung der Aussage bestimmt, die mit der Regel assoziiert ist;
b) ein Knoten des Netzwerks, der als der Verifizierer (100) bezeichnet wird, sich von dem Controller (200) unterscheidet und zu einer anderen administrativen Domäne als der Controller gehört, ruft eine Aussage ab,
c) der Verifizierer (100) greift beim Abrufen der Aussage auf die Inhalte der Aussage zu und wählt bezogen auf mindestens die in der Aussage eingeschlossene Information den Benutzer aus, dessen Erkennungsebene der Verifizierer (100) bestimmten möchte, wobei die Aussage den Benutzer betrifft;
d) der Verifizierer (100) wählt nach Auswählen des Benutzers in Abhängigkeit von mindestens der Identität des Benutzers den Endpunkt des Controllers (200) aus, der das Management der Ebenen der Benutzererkennung im Namen des Benutzers durchführt;
e) der Verifizierer (100) überträgt durch einen Kommunikationskanal des Kommunikationsnetzwerks eine erste Nachricht an den Controller (200), die mindestens die Aussage oder Information, die das Identifizieren der Aussage ermöglicht, sowie Information einschließt, die das Identifizieren des Benutzers ermöglicht;
f) der Controller (200) wählt nach Empfang der ersten Nachricht unter den zuvor konfigurierten und im Controller (200) gespeicherten Regeln mindestens eine Regel aus, um sie anzuwenden, um im Namen des Benutzers die Ebene der Benutzererkennung der Aussage zu bestimmen;
g) der Controller (200) bestimmt im Namen des Benutzers eine Ebene der Benutzererkennung der Aussage, indem mindestens eine Regel angewendet wird, die mit dieser Aussage assoziiert ist, ausgewählt im vorhergehenden Schritt;
h) der Controller (200) überträgt eine zweite Nachricht an den Verifizierer (100), die die Ebene der Benutzererkennung der Aussage einschließt oder identifiziert,
wobei der Controller (200) mindestens eine zuvor konfigurierte Regel modifizieren kann, um die Ebene der Benutzererkennung einer Aussage, die mit der Regel assoziiert ist, an irgendeinem Moment vor oder nach Anwenden der Regel und vor oder nach Übertragen der zweiten Nachricht von dem Controller (200) an den Verifizierer (100) in einer solchen Weise zu bestimmen, dass das Modifizieren der Regel zur Modifikation der Ebene der Benutzererkennung der Aussage führt, mit der die Regel assoziiert ist,
und wobei die Aussagen, für die der Controller (200) eine Ebene der Benutzererkennung bestimmt, durch Entitäten gespeichert oder ausgegeben werden, die auf unterschiedlichen Netzwerkknoten errichtet sind oder zu unterschiedlichen administrativen Domänen gehören, die keine zu Grunde liegenden Vertrauensbeziehungen haben, die mit entweder dem Controller (200) oder dem Verifizierer (100) eingerichtet ist.

2. Verfahren nach Anspruch 1, wobei die Aussage, die den Benutzer betrifft, dessen Ebene der Benutzererkennung erhalten wird, von einem anderen Benutzer ausgegeben worden ist, der sich von jenem Benutzer unterscheidet.

3. Verfahren nach einem der vorhergehenden Ansprüche, ferner einschließend die folgenden Schritte: wenn an irgendeinem gegebenen Moment nach Übertragen der zweiten Nachricht von dem Controller (200) an den Verifizierer (100) der Controller (200) eine Regel modifiziert, die auf die Aussage anwendbar ist, die in der ersten Nachricht eingeschlossen oder identifiziert ist,
- wendet der Controller (200) mindestens die modifizierte Regel auf die Aussage an, um eine neue Ebene der Benutzererkennung zu erhalten, und
- überträgt der Controller (200) eine neue Nachricht an den Verifizierer (100), der die erste Nachricht gesendet hat, wobei die neue Nachricht die Aussage und die neue Ebene der Benutzererkennung der Aussage einschließt oder identifiziert, die gerade eben von dem Controller (200) erhalten wurde.

4. Verfahren nach einem der vorhergehenden Ansprüche, wobei der Verifizierer (100) in Schritt c) den Benutzer, dessen Erkennungsebene gesucht wird, abweichend von einer in der Aussage angegebenen Beziehung auswählt.

5. Verfahren nach einem der vorhergehenden Ansprüche, ferner einschließend:
- einen Netzwerkknoten, der als Benachrichtiger (300) bezeichnet wird, der sich von dem Controller (200) und dem Verifizierer (100) unterscheidet, der bei Wahrnehmung einer neuen oder vorhandenen Aussage in dem Netzwerk, die den Benutzer betrifft, oder der Modifizierung oder Löschung einer Aussage in dem Netzwerk, die den Benutzer betrifft, eine Nachricht an den Controller (200) über das Kommunikationsnetzwerk überträgt, die mindestens eine Aussage oder Information, die die Aussage identifiziert, sowie Information einschließt, die den Benutzer identifiziert, den die Aussage betrifft;
- den Controller (200), der bei Empfang der Aussage von dem Benachrichtiger (300), falls keine vorhandene Regel vorliegt, um die Ebene der Benutzererkennung der Aussage zu bestimmen, dann mindestens eine Regel konfiguriert, um die Ebene der Benutzererkennung der Aussage zu bestimmen; und wenn anderweitig eine Regel vorliegt, um die Ebene der Benutzererkennung der Aussage zu bestimmen, dann der Controller (200) entscheidet, ob diese Regel modifiziert werden soll.

6. Verfahren nach einem der vorhergehenden Ansprüche, wobei eines der in eine Aussage eingeschlossenen Elemente eine Informationsressource mit einem gewissen assoziierten Inhalt identifiziert, die ein Foto, ein Text, ein Video oder jedweder andere Inhaltstyp sein kann; und wobei entweder der Verifizierer (100) oder der Controller (200) prüft, dass die Integrität des Inhalts von dem Moment, in dem die mit der Aussage assoziierte Regel konfiguriert wurde, bis zu dem Moment, in dem der Verifizierer (100) diesen Inhalt erhält, bewahrt worden ist; und wobei der für die Ebene der Benutzererkennung bestimmte definitive Wert von dieser Bewahrung der Integrität abhängt.

7. Verfahren nach einem der vorhergehenden Ansprüche, wobei eines der in die Aussage eingeschlossenen Elemente den Benutzer identifiziert, den die Aussage betrifft.

8. Verfahren nach einem der vorhergehenden Ansprüche, wobei der Schritt, in dem der Controller (200) mindestens eine Regel konfiguriert, um im Namen eines Benutzers eine Ebene der Benutzererkennung einer Aussage zu bestimmen, einschließt:
- der Controller (200) überträgt eine Nachricht an einen Benutzer, die mindestens die Aussage einschließt oder identifiziert;
- der Benutzer überträgt eine Nachricht an den Controller (200), die mindestens eine Ebene der Zustimmung des Benutzers zu der Aussage einschließt oder identifiziert;
- der Controller (200) konfiguriert in Abhängigkeit von mindestens der Ebene der Zustimmung des Benutzers, die von dem Benutzer erhalten wurde, mindestens eine Regel, um im Namen des Benutzers eine Ebene der Benutzererkennung der Aussage zu bestimmen.

9. Verfahren nach einem der Ansprüche 1 bis 7, wobei der Schritt, in dem der Controller (200) mindestens eine Regel konfiguriert, um im Namen eines Benutzers eine Ebene der Benutzererkennung einer Aussage zu bestimmen, einschließt:
- der Benutzer überträgt eine Nachricht an den Controller (200), die mindestens eine Aussage und eine Ebene der Zustimmung des Benutzers zu der Aussage einschließt oder identifiziert, und der Benutzer kann diesen Schritt zu beliebiger Zeit wiederholen, um die Ebene der Zustimmung des Benutzers zu der Aussage zu modifizieren;
- der Controller (200) konfiguriert in Abhängigkeit von mindestens der Ebene der Zustimmung des Benutzers, die von dem Benutzer erhalten wurde, mindestens eine Regel, um im Namen des Benutzers eine Ebene der Benutzererkennung der Aussage zu bestimmen.

10. Verfahren nach einem der Ansprüche 1 bis 7, wobei dieser Schritt, in dem der Controller (200) mindestens eine Regel konfiguriert, um im Namen des Benutzers eine Ebene der Benutzererkennung einer Aussage zu bestimmen, automatisch durchgeführt wird, ohne dass Benutzerintervention erforderlich ist, sofern die Aussage einen Satz von Bedingungen erfüllt, die angeben, dass die Aussage in eine spezifische Gruppe von Aussagen eingeschlossen ist.

11. Verfahren nach Anspruch 8, wobei eines der Elemente einer Aussage eine Informationsressource mit einem gewissen assoziierten Inhalt identifiziert, und wobei:
- der Controller (200) den Inhalt der Informationsressource abruft, die in der Aussage identifiziert wird; und
- der Controller (200) in die Nachricht, die mindestens die Aussage einschließt oder identifiziert, die an den Benutzer übertragen werden soll, den Inhalt der Informationsressource einschließt, die in der Aussage identifiziert wurde.

12. Verfahren nach Anspruch 1, wobei eines der Elemente einer Aussage eine Informationsressource mit einem gewissen assoziierten Inhalt identifiziert, und wobei:
der Schritt a), in dem der Controller (200) mindestens eine Regel konfiguriert, um im Namen eines Benutzers eine Ebene der Benutzererkennung einer Aussage zu bestimmen, ferner einschließt:
- der Controller (200) ruft einen Inhalt ab, der mit der Informationsressource assoziiert ist, die in der Aussage identifiziert wird; und
- der Controller (200) wendet eine Funktion auf den Inhalt an, um einen ersten Integritätsparameter zu erhalten;
- der Schritt b), in dem der Verifizierer (100) eine Aussage abruft, ferner einschließt:
- der Verifizierer (100) ruft einen Inhalt ab, der mit der Informationsressource assoziiert ist, die in der Aussage identifiziert wird; und
- der Verifizierer (100) wendet eine Funktion auf den Inhalt an, um einen zweiten Integritätsparameter zu erhalten;
Schritt e), wobei der Verifizierer (100) eine erste Nachricht an den Controller (200) überträgt, ferner einschließt:
- der Verifizierer (100) überträgt innerhalb der ersten Nachricht zusätzlich den zweiten Integritätsparameter an den Controller (200);
Schritt g), wobei der Controller (200) im Namen des Benutzers eine Ebene der Benutzererkennung bestimmt, ferner einschließt:
- der Controller (200) vergleicht den ersten Integritätsparameter mit dem zweiten, und nur wenn sie gemäß einer Integritätsprüfprozedur äquivalent sind, geht der Controller (200) davon aus, dass die Integrität des Inhalts bewahrt wurde und bestimmt die Ebene der Benutzererkennung der Aussage als Ergebnis der Anwendung der gespeicherten Regel.

13. Verfahren nach Anspruch 1, wobei eines der Elemente einer Aussage eine Informationsressource mit einem gewissen assoziierten Inhalt identifiziert, und wobei:
der Schritt a), in dem der Controller (200) mindestens eine Regel konfiguriert, um im Namen eines Benutzers eine Ebene der Benutzererkennung einer Aussage zu bestimmen, ferner einschließt:
- der Controller (200) ruft den Inhalt ab, der mit der Informationsressource assoziiert ist, die in der Aussage identifiziert wird; und
- der Controller (200) wendet eine Funktion auf den Inhalt an, um einen ersten Integritätsparameter zu erhalten;
Schritt b), in dem der Verifizierer (100) eine Aussage abruft, ferner einschließt:
- der Verifizierer (100) ruft einen Inhalt ab, der mit der Informationsressource assoziiert ist, die in der Aussage identifiziert wird; und
- der Verifizierer (100) wendet eine Funktion auf den Inhalt an, um einen zweiten Integritätsparameter zu erhalten;
Schritt h), wobei der Controller (200) eine zweite Nachricht an den Verifizierer (100) überträgt, ferner einschließt:
- der Controller (200) überträgt ebenfalls innerhalb der zweiten Nachricht den ersten Integritätsparameter an den Verifizierer (100);
und wobei das Verfahren ferner nach Schritt h) einschließt:
- der Verifizierer (100) vergleicht den ersten Integritätsparameter mit dem zweiten, und nur wenn sie gemäß einer Integritätsprüfprozedur äquivalent sind, geht der Verifizierer (100) davon aus, dass die Integrität des Inhalts bewahrt wurde und sieht die Ebene der Benutzererkennung der Aussage als die Ebene der Benutzererkennung an, die von dem Controller (200) empfangen wurde.

14. Verfahren nach Anspruch 1, wobei die mindestens eine Regel die Ebene der Benutzererkennung in Abhängigkeit von der administrativen Domäne des Verifizierers (100) oder dessen Netzwerkadresse oder der Identität des Benutzers bestimmt, in dessen Namen der Verifizierer (100) arbeitet.

15. System zum Abfragen und Erhalten einer Ebene der Benutzererkennung von Aussagen, die den Benutzer betreffen, in einem Kommunikationsnetzwerk, wobei das System umfasst:
mindestens einen ersten Netzwerkknoten, der als der Controller (200) bezeichnet wird, der im Namen des Benutzers mindestens eine mit jeder Aussage assoziierte Regel konfiguriert und speichert; wobei diese Regel im Namen jenes Benutzers die Ebene der Benutzererkennung der mit der Regel assoziierten Aussage bestimmt; wobei die Regel zu irgendeiner Zeit modifiziert werden kann, und wobei die Aussagen, für die der Controller (200) die Regeln konfiguriert, durch Entitäten gespeichert oder ausgegeben werden, die auf unterschiedlichen Netzwerkknoten errichtet sind, die zu unterschiedlichen administrativen Domänen gehören,
mindestens einen zweiten Netzwerkknoten, der als der Verifizierer (100) bezeichnet wird, der zu einer zweiten administrativen Domäne gehört, die sich von derjenigen des Controllers unterscheidet, einschließlich:
- Mitteln zum Abrufen einer Aussage und, nach Abrufen der Aussage, zum Zugriff auf die Inhalte der Aussage und zum Auswählen, bezogen auf mindestens der in die Aussage eingeschlossenen Information, des Benutzers, dessen Erkennungsebene der Verifizierer (100) bestimmen möchte, wobei die Aussage den Benutzer betrifft und, nach Auswählen des Benutzers, in Abhängigkeit von der Identität des Benutzers Auswählen des Endpunkts des Controllers (200), der das Management der Ebene der Benutzererkennung im Namen des Benutzers durchführt, und
- Mitteln zum Übertragen durch einen Kommunikationskanal des Kommunikationsnetzwerks einer ersten Nachricht an den Controller (200), die mindestens die Aussage oder Information, die das Identifizieren der Aussage ermöglicht, sowie Information einschließt, die das Identifizieren des Benutzers ermöglicht, dessen Erkennungsebene angefordert wird; und
- Mitteln zum Empfangen einer zweiten Nachricht, die mindestens die angeforderte Ebene der Benutzererkennung einschließt, von dem Controller (200) über einen Kommunikationskanal des Kommunikationsnetzwerks,
und wobei der Controller (200) einschließt:
- Mittel zum Auswählen unter den zuvor konfigurierten und gespeicherten Regeln nach Empfang der ersten Nachricht von dem Verifizierer (100) von mindestens einer Regel zur Anwendung auf die Aussage; zum Bestimmen, im Namen des Benutzers, einer Ebene der Benutzererkennung der Aussage durch Anwenden mindestens der einen mit jener Aussage assoziierten Regel; und zum Übertragen einer zweiten Nachricht an den Verifizierer (100), welche die Ebene der Benutzererkennung der Aussage einschließt oder identifiziert, und
- Mittel zum:
- Aktualisieren der Konfiguration von mindestens einer zuvor konfigurierten Regel gemäß einem Regelmodifikationsbefehl, der von dem Controller (200) zu irgendeiner Zeit empfangen wurde;
- Anwenden der aktualisierten Regel auf jede Aussage, sofern vorhanden, auf die die Regel jemals angewendet worden ist, um im Namen des Benutzers eine Ebene der Benutzererkennung zu bestimmen, wodurch eine neue Ebene der Benutzererkennung erhalten wird; und
- Übertragen der soeben erhaltenen neuen Ebene der Benutzererkennung an jeden Verifizierer (100), der ursprünglich die Aussage abgeschickt hat, wobei auch die Aussage identifiziert wird, auf die die neue Ebene der Benutzererkennung angewendet wurde.

16. System nach Anspruch 15, ferner einschließend:
- einen Netzwerkknoten, der sich von dem Controller (200) und dem Verifizierer (100) unterscheidet und als Benachrichtiger (300) bezeichnet wird, der bei Wahrnehmung einer neuen oder vorhandenen Aussage in dem Netzwerk, die den Benutzer betrifft, oder einer Modifizierung oder Löschung einer Aussage in dem Netzwerk, die den Benutzer betrifft, eine Nachricht an den Controller (200) über das Kommunikationsnetzwerk überträgt, die mindestens eine Aussage oder Information, die die Aussage identifiziert, sowie Information einschließt, die den Benutzer des Controllers (200) identifiziert, den die Aussage betrifft;
und wobei der Controller (200) nach Empfang der Aussage von dem Benachrichtiger (300) Mittel zum Prüfen einschließt, ob eine vorhandene Regel vorliegt, um die Ebene der Benutzererkennung der Aussage zu bestimmen, und
in jenem Fall Entscheiden, ob die vorhandene Regel modifiziert werden soll, und anderenfalls Konfigurieren einer neuen Regel, um im Namen des Benutzers die Ebene der Benutzererkennung der Aussage zu bestimmen, und Speichern der Regel.

17. Computerprogramm, das Anweisungen umfasst, die konfiguriert sind, um bei Ausführung auf einem Computer, einem digitalen Signalprozessor, einem feldprogrammierbaren Gate-Array (FPGA), anwendungsspezifischen integrierten Schaltkreisen (ASICs), einem Mikroprozessor, einem Mikrocontroller, Firmware oder dergleichen einschließlich verteilten Lösungen die Schritte der Methode gemäß einem der Ansprüche 1 bis 14 durchzuführen.

## Revendications

1. Procédé d'interrogation et d'obtention d'un niveau de reconnaissance par l'utilisateur de déclarations concernant ledit utilisateur dans un réseau de communications, dans lequel le procédé comprend les étapes suivantes :
a) Au moins un premier noeud du réseau, appelé le dispositif (200) de commande, configure et mémorise au moins une règle associée à chaque déclaration, en déterminant ladite règle, pour le compte de l'utilisateur, le niveau de reconnaissance par l'utilisateur de la déclaration associée à ladite règle ;
b) un noeud du réseau, appelé le dispositif (100) de vérification, différent du dispositif (200) de commande et appartenant à un domaine administratif différent de celui du dispositif de commande, récupère une déclaration
c) lors de la récupération de la déclaration, le dispositif (100) de vérification accède aux contenus de la déclaration et sélectionne, sur la base, au moins, des informations comprises dans la déclaration, l'utilisateur dont le dispositif (100) de vérification souhaite déterminer le niveau de reconnaissance, ladite déclaration concernant l'utilisateur ;
d) lors de la sélection de l'utilisateur, le dispositif (100) de vérification sélectionne en fonction, au moins, de l'identité de l'utilisateur, le point terminal du dispositif (200) de commande gérant les niveaux de reconnaissance par l'utilisateur pour le compte dudit utilisateur;
e) le dispositif (100) de vérification transmet, par le biais d'un canal de communications du réseau de communications, un premier message au dispositif (200) de commande qui comprend au moins ladite déclaration ou les informations qui permettent à ladite déclaration d'être identifiée, ainsi que les informations qui permettent audit utilisateur d'être identifié ;
f) lors de la réception du premier message, le dispositif (200) de commande choisit, parmi les règles précédemment configurées et mémorisées au niveau du dispositif (200) de commande, au moins une règle à appliquer afin de déterminer, pour le compte dudit utilisateur, le niveau de reconnaissance par l'utilisateur de ladite déclaration ;
g) le dispositif (200) de commande détermine, pour le compte dudit utilisateur, un niveau de reconnaissance par l'utilisateur de ladite déclaration en appliquant au moins ladite une règle associée à cette déclaration, telle que choisie dans l'étape précédente ;
h) le dispositif (200) de commande transmet un second message au dispositif (100) de vérification qui comprend ou identifie le niveau de reconnaissance par l'utilisateur de ladite déclaration,
dans lequel le dispositif (200) de commande peut modifier, au moins une règle précédemment configurée pour déterminer le niveau de reconnaissance par l'utilisateur d'une déclaration associée à ladite règle, à un moment quelconque avant ou après l'application de ladite règle et avant ou après la transmission du second message depuis le dispositif (200) de commande au dispositif (100) de vérification, de manière à ce que la modification de la règle résulte en la modification du niveau de reconnaissance par l'utilisateur de la déclaration à laquelle la règle est associée
et dans lequel les déclarations pour lesquelles le dispositif (200) de commande détermine un niveau de reconnaissance par l'utilisateur, sont mémorisées ou émises par des entités déployées sur différents noeuds de réseau ou appartenant à différents domaines administratifs qui ne présentent pas de relation de confiance sous-jacente établie avec le dispositif (200) de commande ou le dispositif (100) de vérification.

2. Un procédé selon la revendication 1, dans lequel la déclaration concernant ledit utilisateur dont le niveau de reconnaissance par l'utilisateur est obtenu, a été émise par un second utilisateur, différent dudit utilisateur.

3. Procédé selon une quelconque des revendications précédentes, comprenant en outre les étapes suivantes : si, à un moment quelconque après la transmission du second message depuis le dispositif (200) de commande vers le dispositif (100) de vérification, le dispositif (200) de commande modifie une règle applicable à la déclaration comprise ou identifiée dans le premier message
- le dispositif (200) de commande applique, au moins, ladite règle modifiée à ladite déclaration afin d'obtenir un nouveau niveau de reconnaissance par l'utilisateur et
- le dispositif (200) de commande transmet un nouveau message au dispositif (100) de vérification, qui a envoyé ledit premier message, dans lequel le nouveau message comprend ou identifie ladite déclaration et le nouveau niveau de reconnaissance par l'utilisateur de ladite déclaration, tel que juste obtenu par le dispositif (200) de commande.

4. Un procédé selon une quelconque des revendications précédentes, dans lequel dans l'étape c) le dispositif (100) de vérification sélectionne l'utilisateur dont on recherche le niveau de reconnaissance, en partant d'une relation mentionnée dans la déclaration.

5. Procédé selon une quelconque des revendications précédentes, comprenant en outre :
- un noeud de réseau, appelé le dispositif (300) de notification, différent du dispositif (200) de commande et du dispositif (100) de vérification, qui, lorsqu'il remarque une nouvelle déclaration ou une déclaration existante dans le réseau concernant l'utilisateur ou la modification ou la suppression d'une déclaration dans le réseau concernant l'utilisateur, transmet un message au dispositif (200) de commande par le biais du réseau de communications qui, au moins, comprend une déclaration ou des informations qui identifient la déclaration, ainsi que des informations qui identifient l'utilisateur concerné par la déclaration ;
- le dispositif (200) de commande, lors de la réception de la déclaration en provenance du dispositif (300) de notification, s'il n'existe pas de règle existante pour déterminer le niveau de reconnaissance par l'utilisateur de ladite déclaration, alors configure au moins une règle pour déterminer le niveau de reconnaissance par l'utilisateur de ladite déclaration ; et s'il existe autrement une règle pour déterminer le niveau de reconnaissance par l'utilisateur de ladite déclaration, alors le dispositif (200) de commande décide s'il doit modifier cette règle.

6. Procédé selon une quelconque des revendications précédentes, dans lequel un des éléments compris dans une déclaration identifie une ressource d'informations avec un certain contenu associé, qui peut être une photographie, un texte, une vidéo ou un autre type quelconque de contenu ; et dans lequel soit le dispositif (100) de vérification soit le dispositif (200) de commande vérifie que le contenu a eu son intégrité préservée depuis le moment où la règle associée à ladite déclaration a été configurée jusqu'au moment où le dispositif (100) de vérification obtient ledit contenu ; et dans lequel la valeur définitive déterminée pour le niveau de reconnaissance par l'utilisateur dépend de cette préservation de l'intégrité.

7. Procédé selon une quelconque des revendications précédentes, dans lequel un des éléments compris dans la déclaration identifie l'utilisateur concerné par la déclaration.

8. Procédé selon une quelconque des revendications précédentes, dans lequel l'étape dans laquelle le dispositif (200) de commande configure au moins une règle pour déterminer, pour le compte d'un utilisateur, un niveau de reconnaissance par l'utilisateur d'une déclaration, comprend :
- le dispositif (200) de commande transmet un message à un utilisateur qui, au moins, comprend ou identifie la déclaration ;
- l'utilisateur transmet un message au dispositif (200) de commande qui, au moins, comprend ou identifie un niveau d'accord de l'utilisateur avec ladite déclaration ;
- le dispositif (200) de commande configure, en fonction, au moins, du niveau d'accord de l'utilisateur reçu de l'utilisateur, au moins une règle pour déterminer, pour le compte de l'utilisateur, un niveau de reconnaissance par l'utilisateur de ladite déclaration.

9. Procédé selon une quelconque des revendications 1 à 7, dans lequel l'étape dans laquelle le dispositif (200) de commande configure, au moins, une règle pour déterminer, pour le compte d'un utilisateur, un niveau de reconnaissance par l'utilisateur d'une déclaration comprend :
- l'utilisateur transmet un message au dispositif (200) de commande qui, au moins, comprend ou identifie une déclaration et un niveau d'accord de l'utilisateur avec ladite déclaration et l'utilisateur peut répéter cette étape à tout moment pour modifier le niveau d'accord de l'utilisateur avec ladite déclaration ;
- le dispositif (200) de commande configure, en fonction, au moins, dudit niveau d'accord de l'utilisateur reçu de l'utilisateur, au moins une règle pour déterminer, pour le compte de l'utilisateur, un niveau de reconnaissance par l'utilisateur de ladite déclaration.

10. Procédé selon une quelconque des revendications 1 à 7, dans lequel l'étape dans laquelle le dispositif (200) de commande configure au moins une règle pour déterminer, pour le compte de l'utilisateur, un niveau de reconnaissance par l'utilisateur d'une déclaration, est réalisée automatiquement sans nécessiter l'intervention de l'utilisateur au cas où la déclaration satisfait un ensemble de conditions qui indiquent que la déclaration est comprise dans un groupe spécifique de déclarations.

11. Procédé selon la revendication 8, dans lequel un des éléments d'une déclaration identifie une ressource d'informations avec un certain contenu associé et dans lequel :
- le dispositif (200) de commande récupère le contenu de la ressource d'information identifiée dans la déclaration ; et
- le dispositif (200) de commande inclut également, dans le message qui comprend ou identifie au moins la déclaration, à transmettre à l'utilisateur, le contenu de la ressource d'information identifiée dans la déclaration.

12. Procédé selon la revendication 1, dans lequel un des éléments d'une déclaration identifie une ressource d'information avec un certain contenu associé et dans lequel :
l'étape a), dans laquelle le dispositif (200) de commande configure au moins une règle pour déterminer, pour le compte de l'utilisateur, un niveau de reconnaissance par l'utilisateur d'une déclaration, comprend en outre
- le dispositif (200) de commande récupère un contenu associé à la ressource d'information identifiée dans la déclaration et
- le dispositif (200) de commande applique une fonction audit contenu afin d'obtenir un premier paramètre d'intégrité ;
l'étape b) dans laquelle le dispositif (100) de vérification récupère une déclaration, comprend en outre
- le dispositif (100) de vérification récupère un contenu associé à la ressource d'information identifiée dans la déclaration et
- le dispositif (100) de vérification applique une fonction audit contenu afin d'obtenir un second paramètre d'intégrité ;
l'étape e) dans laquelle le dispositif (100) de vérification transmet un premier message au dispositif (200) de commande comprend en outre
- le dispositif (100) de vérification transmet, dans le premier message, en plus, le second paramètre d'intégrité au dispositif (200) de commande ;
l'étape g) dans laquelle le dispositif (200) de commande détermine, pour le compte d'un utilisateur, un niveau de reconnaissance par l'utilisateur, comprend en outre :
- le dispositif (200) de commande compare le premier paramètre d'intégrité au second et, seulement s'ils sont équivalents conformément à une procédure de vérification d'intégrité, alors le dispositif (200) de commande considère que l'intégrité du contenu a été préservée et détermine le niveau de reconnaissance par l'utilisateur de la déclaration en résultat de l'application de la règle mémorisée.

13. Procédé selon la revendication 1, dans lequel un des éléments d'une déclaration identifie une ressource d'information avec un certain contenu associé et dans lequel :
l'étape a) dans laquelle le dispositif (200) de commande configure au moins une règle pour déterminer, pour le compte d'un utilisateur, un niveau de reconnaissance par l'utilisateur d'une déclaration, comprend en outre
- le dispositif (200) de commande récupère un contenu associé à la ressource d'informations identifiée dans la déclaration et
- le dispositif (200) de commande applique une fonction audit contenu afin d'obtenir un premier paramètre d'intégrité ;
l'étape b) dans laquelle le dispositif (100) de vérification récupère une déclaration comprend en outre
- le dispositif (100) de vérification récupère un contenu associé à la ressource d'information identifiée dans la déclaration et
- le dispositif (100) de vérification applique une fonction audit contenu afin d'obtenir un second paramètre d'intégrité ;
l'étape h) dans laquelle le dispositif (200) de commande transmet un second message au dispositif (100) de vérification comprend en outre
- le dispositif (200) de commande transmet également, dans le second message, le premier paramètre d'intégrité au dispositif (100) de vérification ;
et dans lequel le procédé comprend en outre après l'étape h) ;
- le dispositif (100) de vérification compare le premier paramètre d'intégrité au second et, seulement s'ils sont équivalents conformément à une procédure de vérification d'intégrité, alors le dispositif (100) de vérification considère que l'intégrité du contenu a été préservée et, concernant le niveau de reconnaissance par l'utilisateur de la déclaration, le considère comme le niveau de reconnaissance par l'utilisateur reçu du dispositif (200) de commande.

14. Procédé selon la revendication 1, dans lequel la au moins une règle détermine le niveau de reconnaissance par l'utilisateur en fonction du domaine administratif du dispositif (100) de vérification ou son adresse réseau ou l'identifié de l'utilisateur pour le compte duquel le dispositif (100) de vérification travaille.

15. Système d'interrogation et d'obtention d'un niveau de reconnaissance par l'utilisateur de déclarations concernant ledit utilisateur dans un réseau de communications, le système comprenant :
au moins un premier noeud de réseau, appelé le dispositif (200) de commande, qui configure et mémorise, pour le compte d'un utilisateur, au moins une règle associée à chaque déclaration ; détermine ladite règle, pour le compte de cet utilisateur, le niveau de reconnaissance par l'utilisateur de la déclaration associée à ladite règle ; dans lequel ladite règle peut être modifiée à tout moment et dans lequel lesdites déclarations pour lesquelles le dispositif (200) de commande configure les règles sont mémorisées ou émises par des entités déployées sur différents noeuds de réseau appartenant à différents domaines administratifs,
au moins un second noeud de réseau, appelé le dispositif (100) de vérification, qui appartient à un second domaine administratif différent de celui du dispositif de commande, comprenant :
- un moyen de récupération d'une déclaration et, lors de la récupération de la déclaration, d'accès au contenu de la déclaration et de sélection, sur la base au moins de l'information comprise dans la déclaration, l'utilisateur dont le dispositif (100) de vérification souhaite déterminer le niveau de reconnaissance, ladite déclaration concernant l'utilisateur et, lors de la sélection de l'utilisateur, de sélection, en fonction de l'identité de l'utilisateur, le point terminal du dispositif (200) de commande gérant le niveau de reconnaissance par l'utilisateur pour le compte dudit utilisateur et
- un moyen de transmission, par le biais d'un canal de communications du réseau de communications, d'un premier message au dispositif (200) de commande qui comprend au moins ladite déclaration ou des informations qui permettent à ladite déclaration d'être identifiée, ainsi que des informations qui permettent à l'utilisateur, dont le niveau de reconnaissance est demandé, d'être identifié et
- un moyen de réception, depuis le dispositif (200) de commande, par le biais d'un canal de communications du réseau de communications, d'un second message qui comprend, au moins, le niveau de reconnaissance par l'utilisateur demandé et dans lequel ledit dispositif (200) de commande comprend :
- un moyen, lors de la réception du premier message depuis le dispositif (100) de vérification, de choix, parmi les règles précédemment configurées et mémorisées, d'au moins une règle à appliquer à ladite déclaration ; de détermination, pour le compte dudit utilisateur, d'un niveau de reconnaissance par l'utilisateur de ladite déclaration en appliquant, au moins, ladite au moins une règle associée à cette déclaration ; et de transmission d'un second message au dispositif (100) de vérification qui comprend ou identifie le niveau de reconnaissance par l'utilisateur de la déclaration et
- un moyen de
- mise à jour de la configuration d'au moins une règle configurée précédemment conformément à une instruction de modification de règle reçue par le dispositif (200) de commande à tout moment ;
- application de la règle mise à jour à chaque déclaration, s'il en existe, à laquelle la règle a déjà été appliquée pour déterminer, pour le compte de l'utilisateur, un niveau de reconnaissance par l'utilisateur et ainsi d'obtention d'un nouveau niveau de reconnaissance par l'utilisateur ; et
- transmission dudit nouveau niveau de reconnaissance par l'utilisateur, tout juste obtenu, à chaque dispositif (100) de vérification qui a soumis ladite déclaration à l'origine, identifiant également la déclaration à laquelle ledit nouveau niveau de reconnaissance par l'utilisateur s'applique.

16. Système selon la revendication 15, comprenant en outre :
- un noeud de réseau, différent du dispositif (200) de commande et du dispositif (100) de vérification, appelé le dispositif (300) de notification qui, lorsqu'il remarque une nouvelle déclaration ou une déclaration existante dans le réseau concernant ledit utilisateur ou une modification ou suppression d'une déclaration dans le réseau concernant ledit utilisateur, transmet un message au dispositif (200) de commande par le biais du réseau de communications qui, au moins, comprend la déclaration ou des informations qui identifient la déclaration, ainsi que des informations qui identifient l'utilisateur du dispositif (200) de commande concerné par ladite déclaration
et dans lequel le dispositif (200) de commande comprend un moyen, lors de la réception de la déclaration depuis le dispositif (300) de notification, de vérification pour savoir s'il existe une règle existante pour déterminer le niveau de reconnaissance par l'utilisateur de ladite déclaration et
dans ce cas, de décision à savoir s'il faut modifier la règle existante et
sinon, de configuration d'une nouvelle règle pour déterminer, pour le compte dudit utilisateur, le niveau de reconnaissance par l'utilisateur de ladite déclaration et de mémorisation de ladite règle.

17. Programme informatique comprenant des instructions configurées pour réaliser les étapes du procédé selon une quelconque des revendications 1 à 14 lorsqu'il est exécuté sur un ordinateur, un processeur de signal numérique, une matrice prédiffusée programmable par l'utilisateur, matrice FPGA, des circuits intégrés spécifiques à l'application, ASIC, un microprocesseur, un microcontrôleur, un micro-logiciel ou analogues, comprenant un élément distribué.
